# EUROPEAN PATENT SPECIFICATION

(11) **EP 3 109 215 B1**
(45) Date of publication and mention of the grant of the patent: **22.04.2020**
(21) Application number: 15001838.0
(22) Date of filing: 22.06.2015
(51) Int. Cl.: C04B 7/32

(54) **MINERALIZER FOR CALCIUM SULFOALUMINATE TERNESITE CEMENTS**
MINERALISATOR FÜR CALCIUMSULFOALUMINAT-TERNESIT-ZEMENTE
AGENT MINÉRALISATEUR POUR CIMENTS TERNÉSITES AU SULFOALUMINATE DE CALCIUM

(43) Date of publication of application: 28.12.2016
(73) Proprietor: HeidelbergCement AG, 69120 Heidelberg (DE)
(72) Inventor: Bullerjahn, Frank, 69181 Leimen (DE); Ben Haha, Mohsen, 69117 Heidelberg (DE)
(74) Representative: Zellentin & Partner mbB Patentanwälte

(56) References cited:
- EP-A1- 2 842 922
- EP-A1- 2 842 923
- EP-A1- 2 842 924
- BENARCHID ET AL: "The effect of Cr2O3 and P2O5 additions on the phase transformations during the formation of calcium sulfoaluminate C4A3S@?", CEMENT AND CONCRETE RESEARCH, PERGAMON PRESS, ELMSFORD, NY, US, vol. 35, no. 11, 1 November 2005 (2005-11-01), pages 2074-2080, XP005158766, ISSN: 0008-8846, DOI: 10.1016/J.CEMCONRES.2005.06.005

## Description

The present invention relates to a method for production of calcium sulfoaluminate ternesite clinker and cement types (CSAT). The invention further relates to calcium sulfoaluminate ternesite cements produced from the clinker and binders comprising the cement.

To simplify the description below, the following abbreviations, which are common in the cement industry, will be used: H - H₂O, C - CaO, A - Al₂O₃, F - Fe₂O₃, M - MgO, S - SiO₂ and $ - SO₃. Additionally, compounds are generally indicated in the pure forms thereof, without explicitly stating series of solid solutions/substitution by foreign ions and the like, as are customary in technical and industrial materials. As any person skilled in the art will understand, the composition of the phases mentioned by name in the present invention may vary, depending on the chemistry of the raw meal and the type of production, due to the substitution with various foreign ions, such compounds likewise being covered by the scope of the present invention.

Within the context of the present invention, clinker shall mean a sinter product which is obtained by burning a raw material mixture at an elevated temperature and which contains at least the hydraulically reactive phase ye'elimite (Ca₄(AlO₂)₆SO₄ or C₄A₃$ in cement chemist's notation) and ternesite (Ca₅(SiO₄)₂SO₄) or C₅S₂$ in cement chemist's notation). Cement denotes a clinker that is ground with or without adding further components. Binder or binder mixture denotes a mixture hardening hydraulically and comprising cement and typically, but not necessarily, additional finely ground components, and which is used after adding water, optionally admixtures and aggregate. A clinker may already contain all the necessary or desired phases and be used directly as a binder after being ground to cement.

The cement industry is known to consume a large quantity of raw materials and energy. In order to reduce the environmental impact industrial wastes have been promoted as raw materials and fuels to replace the naturally available raw materials for manufacturing. From the prior art it is further known to use fluxes and mineralizers for producing Portland cement clinker. Fluxes and mineralisers are defined as materials that promote the formation of melt and of intended clinker phases, respectively, already at lower burning temperatures during sintering, thereby allowing a reduction of sinter temperature or an increased conversion at the same temperature. The differentiation between fluxes and mineralisers is typically not applied strictly, as many materials show both effects. GB 1 498 057 is an example for a method of manufacturing clinker using fluxes/mineralizers. According to this method fluorine and sulphur are added during the raw mix preparation, usually in the form of fluorite (CaF₂) and gypsum (CaSO₄ • 2H₂O).

Calcium fluoride is a typical flux used in the cement industry for reducing the temperature at which Portland cement (OPC) clinker is burnt. Cement manufacturers usually add calcium fluoride during the preparation of the raw mix to produce white cements, to optimize the production of grey cements and to reduce CO₂ emissions.

Calcium sulfate is another flux/mineralizer that has gained practical importance for OPC. As is well known, the cement industry also uses calcium sulfate (natural gypsum, chemical gypsum and anhydrite) as a setting regulator (typical addition rate is 3-5 %) adding it upon clinker grinding.

The development of alternative cements has been another focus besides optimizing the manufacturing of Portland cement. Over the past 35 years or so, energy saving or "low-energy" cement have been studied. To this end, calcium sulfoaluminate and belite cements were investigated.

Calcium sulfoaluminate cements or clinkers contain mainly polymorphs of ye'elimite. Depending on the raw materials used and the applied burning temperature they typically also contain belite, ferrites and/or aluminates, and anhydrite. A specifically desirable clinker further contains ternesite, see e.g. WO 2013/023728 A2. Methods of manufacturing the calcium sulfoaluminate ternesite (CSAT) clinkers and cements are known from WO 2013/023731 A2 and WO 2013/023729 A2. Typically raw materials are mixed in appropriate amounts, ground and burnt in a kiln to give a clinker. Usually, the clinker is then ground together with sulfate and/or calcium sulfoaluminate and optionally some other components to give the cement. A separate grinding is also possible and may be advantageous when the grindability of the components is largely different. The sulfate can be gypsum, bassanite, anhydrite, ternesite or mixtures thereof whereby anhydrite is commonly used. CSAT cements are produced at lower temperatures than Portland cement and require less energy for grinding. Furthermore, they require less limestone in the raw mix than Portland cement, so there are less CO₂ emissions.

It is further known from EP 2 842 922 A1 to add glass and/or copper as flux/mineralizer in the manufacture of aluminate or calcium sulfoaluminate ternesite clinkers to promote melt formation and increase ye'elimite amount and/or reactivity.

The use of industrial side products (e.g. slag, embers) as substitute raw-materials for calcium sulfoaluminate cement is known from the prior art, too. Such raw materials usually contain a higher amount of various impurities than mineral raw materials, wherein the impurities can act as flux/mineralizer, but the effect is almost never considered.

One important aspect of manufacturing calcium sulfoaluminate ternesite clinkers is the correlation between the optimum temperature for the clinker formation and the thermal stability of the intended clinker phases. Ye'elimite (C₄A₃$) is generally stable up to temperatures of around 1250 °C. At higher temperatures like e.g. above 1300 °C a faster formation of C₄A₃$ is normally observed but followed by a fast decomposition. At 1350 °C this process is even more pronounced. The phase C₅S₂$ shows a similar behaviour but at significant lower temperatures of about 1100 to 1200 °C.

US 2007/0266903 A1 describes the use of mineralizers, mainly borax and calcium fluoride, for the production of BCSAF clinker with the following mineralogical composition: 5 to 25 % C₂AₓF₍₁₋ₓ₎, 15 to 35 % C₄A₃$, 40 to 75 % C₂S (with at least 50% as alpha) and 0.01 to 10 % in total of minor phases.

EP 2 105 419 A1 describes an additive compound, based on a water soluble calcium salt and an alkanolamine, as grinding aid as well as an performance enhancing agent for a BCSAF clinker with the following mineralogical composition: 5 to 25 % C₂AₓF₍₁₋ₓ₎, 15 to 35 % C₄A₃$, 40 to 75 % C₂S (with at least 50% as alpha) and 0.01 to 10 % in total of minor phases.

The article "Characterization of mortars from belite-rich clinkers produced from inorganic wastes", Chen et al., Cement & Concrete Composites 33 (2011), 261-266 reports the successful use of an electroplating sludge, containing 55826 ppm Cr, as a major raw material for the production of belite-rich OPC (BRC) at labscale.

The article "Reuse of heavy metal-containing sludges in cement production", Shih et al., Cement and Concrete Research 35 (2005), 2110-2115 also reports the successful use of heavy metal-containing sludges, containing around 4000 to 40000 ppm Cr, as a raw material for the production of OPC at labscale.

Engelsen describes in "Effect of mineralizers in cement production", SINTEF REPORT No SBF BK A07021 dated 7.6.2007 the use of chrome as a mineralizer for OPC production.

The article "The effect of Cr₂O₃ and P₂O₅ additions on the phase transformations during the formation of calcium sulphoaluminate C₄A₃$", Benarchid and Rogez, Cement and Concrete Research (2005), reports the use of a combination of P₂O₅ and Cr₂O₃ for the synthesis of C₄A₃$ clinker. Neither an information about the use of chrome as mineralizer for the formation of ternesite clinker nor a beneficial effect on the thermal stability of ternesite (i.e. stability towards higher sintering temperatures like > 1200 °C up to 1400 °C) is presented. The effect of the combination on the formation of C₄A₃$ is split, higher concentrations were found to stabilize CA and thus decrease the C₄A₃$ content, i.e. hinder its formation. As a result, uncombined anhydrite will be left in the clinker which is thermodynamically not stable at ≥ 1300 °C. This leads to the undesired volatilization of SO₂ and the formation of free CaO within the clinker.

It is an object of the present invention to produce a ternesite containing clinker having an improved clinker mineralogy, i.e. formation and thermal stability of ternesite, in a single sintering step above 1200 °C, and preferably around 1250 °C to 1350 °C and most preferably around 1300 °C. Furthermore, it is an objective of this invention to present an alternative method for the treatment or use of heavy metal, mainly chromium, contaminated materials.

Surprisingly it was found that ternesite is formed in a broad range of solid solutions in the presence of chrome whereby for example mainly sulphate but also silicon can be partly replaced by chromium. Chrome significantly improves the thermal stability of ternesite towards higher sintering temperatures compared to the state of the art. As a result ternesite bearing clinker can be formed at temperatures suitable or even optimum for the formation of ye'elimite. Furthermore, magnesium sources can be added to enable the formation of chromate-bearing spinel-type phases and permanently store / fix chromate in phases that are inert during hydraulic reaction and in the hardened paste. Thus, raw materials can be used which heretofore typically had to be treated as hazardous waste and stockpiled, as they contain heavy loads of for example chrome.

Accordingly the above object is solved by a method for producing ternesite or calcium sulfoaluminate ternesite clinker comprising the following steps:
- providing a raw meal comprising at least sources of CaO, SiO₂, Al₂O₃, SO₃ and preferably also of Fe₂O₃ and/or MgO,
- sintering the raw meal in a kiln at a temperature ranging from > 1200 to 1400 °C, preferably from 1200 to 1350 °C, to provide a clinker, and
- cooling the clinker comprising 10 - 95 % by weight C₄A₃₋ₓFₓ$, with x ranging from 0 to 2, 5 - 90 % by weight C₅S₂$, 0 - 85 % by weight C₂S, 0 - 30 % by weight aluminates, 0 - 30 % by weight ferrites, 0 - 30 % by weight calcium sulfate and up to 20 % by weight minor phases, all with respect to the total weight of the clinker, wherein at least one compound containing chrome is added prior to or during the sintering providing a total content of chrome in the raw meal of ≥ 500 mg/kg, preferably ≥ 1000 mg/kg and most preferred ≥ 2000 mg/kg. Conditions are preferably chosen such that all or almost all heavy metals, mainly chrome, are bound in clinker minerals.

Preferably the raw meal is made from one or more raw materials providing the following amounts of the components calculated as oxides:
CaO: 35 to 65 % by weight,
   preferably from 40 to 50 % by weight, most preferred from 45 to 55 % by weight;
Al₂O₃: 7 to 45 % by weight,
   preferably from 10 to 35 % by weight, most preferred from 15 to 25 % by weight;
SO₃: 5 to 25 % by weight,
   preferably from 7 to 20 % by weight, most preferred from 8 to 15 % by weight;
SiO₂: 3 to 30 % by weight,
   preferably from 5 to 25 % by weight, most preferred from 10 to 20 % by weight;
Fe₂O₃: 0 to 30 % by weight,
   preferably from 3 to 20 % by weight, most preferred from 5 to 15 % by weight,
MgO: 0 to 10 % by weight,
   preferably from 1 to 5 % by weight, most preferred from 2 to 4 % by weight;
Cr₂O₃: ≥ 500 mg/kg, preferably ≥ 1000 mg/kg, most preferred ≥ 2000 mg/kg; wherein all components present, including those not listed above, sum up to 100 %.

The cooling of the clinker can take place fast or slowly in the known manner. Typically, fast cooling in air is applied. But it is known and can be beneficial for some clinkers to apply a slow cooling over specific temperature ranges, i.e. a tempering step before cooling. Thereby, the content of desired phases can be increased and unwanted phases can be converted into desired ones like e.g. C₅S₂$ and/or C₄A₃₋ₓFₓ$.

The compound containing chrome acts as mineralizer. It can be added to the raw meal, e.g. to the raw materials, or be contained in at least one raw material, whereby raw materials and mineralizers are ground together. It can be added after grinding the raw materials to the raw meal at the feed part or in the pre-heater. By adding the mineralizers into the raw material they can be homogenized directly with the raw meal. Alternatively, the mineralizers can be added as powders and/or as silt to sand-like fractions during the processing like e.g. feeding via the kiln inlet, injecting through the burners or at any other suitable point right up to the sintering zone.

The term "compounds containing chrome" means any material containing chrome metal, chrome ions or chemically bound chrome. The compounds containing chrome are preferably, but not exclusively, selected from the group consisting of industrial side products and wastes like slags (e.g. steel slag, ladle slag, converter slag), ashes (siliceous or calcareous fly ash, waste incineration ash), ore residues, alloys, pigments, slurries and muds (e.g. red mud) or chrome minerals like Cr₂O₃, chromite (FeCr₂O₄ to MgCr₂O₄ and the solid solutions with other elements like Al), Na₂[Cr(CO)₅], Na₂[Cr₂(CO)₁₀], Cr(C₆H₆)₂, K₃[Cr(CN)₅NO], CrCl₂, CrCl₃, K₂CrF₆, K₃CrO₈, K₂CrO₄, KCrS₂O₈, [CrCl₂(H2O)₄]Cl, [CrCl(H₂O)₅]Cl₂, [Cr(H₂O)₆]Cl₃, Cr(OH)₃, CrF₄, CrF₆, CrBr₄, CrO₂Cl₂, Cr₂S₃O₂₄H₂₄, chromic acid, acetate and formate of chromium. The industrial side products and wastes are most preferred as compound containing chrome. They can contain chrome or chrome oxide as well as mixtures of two or more of the mentioned compounds.

The amount of compounds containing chrome added in the method according to the invention is usually chosen such that the content of chrome, calculated as Cr₂O₃, is ≥ 500 mg/kg, preferably ≥ 1000 mg/kg, most preferred ≥ 2000 mg/kgwith respect to the total weight of the raw meal (including the material added during pre-heating or sintering).

For Cr metal and compounds with high amount of Cr like Cr₂O₃, chromite (FeCr₂O₄ to MgCr₂O₄ and solid solutions with other elements like Al), Na₂[Cr(CO)₅], Na₂[Cr₂(CO)₁₀], Cr(C₆H₆)₂, K₃[Cr(CN)₅NO], CrCl₂, CrCl₃, K₂CrF₆, K₃CrO₈, K₂CrO₄, KCrS₂O₈, [CrCl₂(H2O)₄]Cl, [CrCl(H₂O)₅]Cl₂, [Cr(H₂O)₆]Cl₃, Cr(OH)₃, CrF₄, CrF₆, CrBr₄, CrO₂Cl₂, Cr₂S₃O₂₄H₂₄, chromic acid, acetate and formate of chromium, and Cr-rich industrial (side) products like e.g. alloys the resulting absolute amount of an added compound will be from a few tenths to a few percent. Typical ranges for additions of compounds like e.g. slags or ashes, that contain low amounts of Cr, are up to 50 % by weight and even more. It is preferred to use industrial side products and waste materials as chrome containing compound.

In one embodiment, the mineralizer additionally comprises glass powder. The glass powder is preferably a borosilicate glass or an alkali-rich glass. Window glass, borosilicate glass and other glass wastes can be used. The glasses can be composed of
- SiO₂ 35 to 85 %, typically from 40 to 80 %
- CaO 0 to 30 %, typically from 7 to 20 %
- Na₂O 0 to 20 %, typically from 4 to 15 %
- B₂O₃ 0 to 20 %, typically from 10 to 15 %
- Al₂O₃ 0.1 to 10 %, typically from 0.5 to 5 %
- K₂O 0 to 8 %, typically from 0.1 to 2 %
- MgO 0 to 10 %, typically from 0.1 to 5 %
- Fe₂O₃ 0 to 1 %, typically from 0.01 to 0.2 %
- SO₃ 0 to 1 %, typically from 0.01 to 0.2 %
- others 0 to 5 %, typically from 0.1 to 2 %.

The glass powder is used in an amount ranging from 0.1 to 5 % by weight, preferably from 1 to 4 % by weight and most preferred from 1.5 to 3 % by weight relative to the total weight of the raw meal.

It is advantageous when further one or more minor elements are present in the raw meal, preferably added with the mineralizers. These elements are preferably selected from the group consisting of Zn, Ti, Mn, Ba, Sr, V, Cu, Co, Ni, P, fluoride, chloride, and mixtures thereof. Usually they will be added as ZnO, TiO₂, MnO, BaO, SrO, VO, CuO, CoO, NiO, P₂O₅, CaF₂, CaCl₂, FeCl₃ and mixtures thereof. The elements can be also added in the form of e.g. ashes, slags (e.g. copper or phosphor slag), alloys, red mud or other industrial by-products and residues. They can be added in amounts from 0.1 to 5 % by weight, preferably from 0.5 to 3 % by weight, and most preferred from 1 to 2 % by weight, calculated as oxides or calcium salts, respectively, relative to the total weight of the raw meal.

The invention is beneficial to all kinds of ternesite and calcium sulfoaluminate ternesite cements both belite-rich and poor ones as well as with differing amounts of aluminates and ferrites.

The ternesite and calcium sulfoaluminate ternesite clinker comprises 10 - 95 % by weight, preferably 20 - 80 % by weight and most preferred 25 to 50 % by weight, C₄A₃₋ₓFₓ$, with x ranging from 0 to 2, preferably from 0.05 to 1 and most preferably from 0.1 to 0.6,
5 - 90 % by weight preferably 10 to 60 % by weight and most preferred 15 to 40 % by weight C₅S₂$,
0 - 85 % by weight, preferably 10 to 60 % by weight, most preferred 20 to 50 % by weight C₂S,
0 - 30 % by weight, preferably 1 to 15 % by weight and most preferred 3 to 10 % by weight aluminates,
0 - 30 % by weight, preferably 3 to 25 % by weight and most preferred 5 to 15 % by weight ferrites,
0 - 30 % by weight calcium sulfate
and up to 20 % by weight minor phases, especially C₃S, C₃A, and one or more X-ray amorphous phases,
all with respect to the total weight of the clinker. The ternesite and calcium sulfoaluminate ternesite cement typically comprises the same phases. However, in case there is little or no calcium sulfate and/or less than the desired amount of C₄A₃₋ₓFₓ$, those are added. Calcium sulfate is added such that the content of calcium sulfate in the CSA cement ranges from 1 to 30 % by weight, preferably from 5 to 25 % by weight and most preferred from 8 to 20 % by weight of the ternesite and CSAT cement.

Furthermore, a part of the total chrome can be bound in mainly magnesium and / or iron bearing chromites.

The clinker obtained in accordance with the invention can be processed further similarly to the known clinkers, to form cement or binder mixtures. The cement is obtained by grinding the clinker, with or without addition of further substances. Usually, calcium sulfate is added before or during grinding when its content in the clinker is not as desired. It can also be added after grinding.

The ternesite and calcium sulfoaluminate ternesite cement obtained by grinding the clinker made according to the invention preferably possesses a fineness, according to the particle size distribution determined by laser granulometry, with a d₉₀ ≤ 90 µm, preferably a d₉₀ ≤ 60 µm and most preferred a d₉₀ ≤ 40 µm. The Rosin Rammler Parameter (slope) n can preferably vary from 0.7 to 1.5, especially from 0.8 to 1.3 and most preferably from 0.9 to 1.15.

It is preferred to use grinding aids during grinding of the clinker made according to the method of the invention. The efficiency of grinding aids can be enhanced as a more uniform material hardness is achieved and a possible segregation of bulk material during the grinding process is reduced or even completely avoided. Additionally, the grinding aids can be specifically chosen for example for clinkers being low or high in iron and/or ternesite.

Preferred grinding aids are: Alkanolamines like e.g. monoethanolamine (MEA), diethanolamine (DEA), triethanolamine (TEA) or triisopropanolamine (TIPA), sugars and sugar derivates, glycols like e.g. monoethylene glycols or diethylene glycols, carboxylic acids like e.g. sodium gluconate, oleic acid, sulphonic acids or (ligno)sulphonate. Typical dosages range from 0.01 % to 1.5 % by weight, preferably 0.02 % to 0.5 % by weight, relative to the weight of clinker.

Preferably, a chromate reducing agent can be added to the cement. The chromate reducing agent can be added before, during or after the cement grinding. Alternatively, the agent can be added during the concrete mixing. The chromate reducing agent can be chosen for example, but not exclusively, from the group of ferrous sulphates, stannous sulphates, stannous chlorides, stannous oxides, sodium sulphates, and mixtures thereof.

The clinker produced with the method according to the invention can have a reduced hardness gradient, due to the depletion of belite, by the formation of ternesite and the depletion of ferritic phase by formation of an iron-rich solid solution of ye'elimite. This improves the grindability of the produced clinker. Additionally, a significantly enhanced formation of a liquid phase, improved clinker mineralogy, already at low temperatures of around 1200 °C as well as at 1250 °C can be observed, allowing a unique phase composition/combination.

Thus, the invention also relates to the clinker obtainable according to the method described and to the cement and binder produced from this ternesite and calcium sulfoaluminate ternesite clinker.

As known for prior art ternesite and CSAT cements and binders, further possible substances are e.g. admixtures which are added to the cement / binder but also to concrete and mortar. Typical useful admixtures / accelerators are: calcium nitrate and/or calcium nitrite, CaO, Ca(OH)₂, CaCl₂, Al₂(SO₄)₃, KOH, K₂SO₄, K₂Ca₂(SO₄)₃, K₂CO₃, NaOH, Na₂SO₄, Na₂CO₃, NaNO₃, LiOH, LiCI, Li₂CO₃, K₂Mg₂(SO₄)₃, MgCl₂, MgSO₄.

The binder can further contain supplementary cementitious materials in amounts ranging from 10 to 90 % by weight. The supplementary cementitious materials are selected from latent hydraulic materials and/or pozzolanic materials, preferably but not exclusively from latent hydraulic slags like e.g. ground granulated blast furnace slag, natural puzzolans, silica rich (type-C) and/or calcium rich (type-F) fly ashes, calcined clays or shales, trass, brick-dust, artificial glasses, silica fume, and burned organic matter residues rich in silica such as rice husk ash or mixtures thereof.

The cement and binder according to the invention are useful as binder for concrete, mortar, etc. and also as binder in construction chemical mixtures such as plaster, floor screed, tile adhesive and so on. It can be used in the same way as known CSA and CSAT cement, whereby it provides improved phase composition and resulting reactivity and/or reduces the environmental impact due to an improved energy utilization.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization such as "approximately", "around" and similar expressions in relation to a numerical value means that up to 10 % higher and lower values are included, preferably up to 5 % higher and lower values, and in any case at least up to 1 % higher and lower values, the exact value being the most preferred value or limit.

### Example 1

The raw mixes were prepared from reagent grade materials (i.e. Al₂O₃, CaCO₃, CaSO₄ • 2 H₂O, Cr₂O₃, Fe₂O₃, SiO₂). The composition of the basic / reference raw mix was 61.58 % CaCO₃, 14.06 % SiO₂, 11.96 % Al₂O₃, 10.54 % Fe₂O₃ and 1.86 % CaSO₄ • 2H₂O for a targeted clinker composition of approximately 60 % belite (C₂S), 30 % ye'elimite (C₄A₃$), 6 % ferrite (C₄AF) and 4 % anhydrite (C$). Sample "Ref" comprised no mineralizer, "Cr-0.5" and "Cr-1.0" comprised 0.5 wt.-% and 1.0 wt.-% Cr₂O₃, respectively. The clinkers were fired at 1250 °C or 1300 °C.

The raw meals were heated up during approximately 30 min from 20 °C to the intended temperature and sintered for 1 hour followed by a rapid cooling in air. The mineralogical phase composition of the comparison clinkers "Ref' and the clinkers according to the invention "Cr" are presented in Table 1, all amounts are in % by weight relative to the total clinker weight.

**Table 1**

| Sample | Ref | Cr-0.5 | Cr-1.0 | Ref | Cr-0.5 | Cr-1.0 |
|---|---|---|---|---|---|---|
| mineralizer | none | Cr₂O₃ | Cr₂O₃ | none | Cr₂O₃ | Cr₂O₃ |
| sintering temp. | 1250 °C | | | 1300 °C | | |
| ∑ C₂S | 58.7 | 47.9 | 42.6 | 60.8 | 48.0 | 44.0 |
| ∑ C₄A₃$ | 29.2 | 30.8 | 32.2 | 29.6 | 31.6 | 32.7 |
| ∑ ferrite | 6.6 | 5.4 | 5.1 | 5.7 | 4.9 | 5.6 |
| C₅S₂$ | -- | 14.5 | 20.1 | -- | 14.7 | 17.7 |
| C$ | 4.2 | 1.1 | -- | 3.0 | 0.4 | -- |
| C | 0.4 | -- | -- | -- | -- | -- |
| M | 0.3 | 0.3 | -- | 0.3 | -- | -- |
| S | -- | -- | -- | 0.1 | -- | -- |
| C₂MS₂ | 0.6 | -- | -- | 0.5 | 0.4 | -- |

From table 1 it can be seen that Cr₂O₃ stabilised ternesite (C₅S₂$) towards higher sintering temperatures and further increased the amount of formed ye'elimite (C₄A₃$) at the expense of the ferritic phases, i.e. it enhanced the formation / stabilisation of a cubic iron-rich C₄A₃₋ₓFₓ$. One additional feature is that the ferritic phases in the reference sample are mainly present as approximately C₄AF. In the case of the chrome bearing samples, the ferritic phases are mainly present as approximately C₂F, CF and CF₂.

These results prove that chrome is a powerful mineralizer for the formation and stabilisation, i.e. towards higher sintering temperatures, of ternesite and furthermore promotes the formation of additional iron-rich ye'elimite.

## Claims

1. A method for improving the formation and/or thermal stability of ternesite during producing a ternesite or calcium sulfoaluminate ternesite clinker by
- providing a raw meal comprising at least sources of CaO, SiO₂, Al₂O₃, and SO₃,
- sintering the raw meal in a kiln in a single sintering step above 1200 °C at a temperature ranging from >1200 to 1400 °C to provide a clinker
- cooling the clinker comprising 10 - 95 % by weight C₄A₃₋ₓFₓ$, with x ranging from 0 to 2, 5 - 90 % by weight C₅S₂$, 0 - 85 % by weight C₂S, 0 - 30 % by weight aluminates, 0 - 30 % by weight ferrites, 0 - 30 % by weight calcium sulfate and up to 20 % by weight minor phases, all with respect to the total weight of the clinker,
wherein at least one compound containing chrome is added as mineralizer to the raw meal prior to or during sintering providing a total amount of chrome calculated as Cr₂O₃ of at least 500 mg/kg in the raw meal.

2. The method according to claim 1, wherein the sintering temperature ranges from 1250 to 1350 °C.

3. The method according to claim 1 or 2, wherein the total amount of chrome in the raw meal is adjusted to ≥ 1000 mg/kg and preferably to ≥ 2000 mg/kg.

4. The method according to at least one of claims 1 to 3, wherein the clinker comprises 20 - 80 % by weight C₄A₃₋ₓFₓ$, with x ranging from 0 to 2, 10 - 60 % by weight C₅S₂$, 0 - 60 % by weight C₂S, 0 - 30 % by weight aluminates, 0 - 30 % by weight ferrites, 0 - 30 % by weight calcium sulfate and up to 20 % by weight minor phases, all with respect to the total weight of the clinker.

5. The method according to at least one of claims 1 to 4, wherein sources for Fe₂O₃ and/or for MgO are additionally provided in the raw meal.

6. The method according to at least one of claims 1 to 5, wherein the mineralizer is added to the raw materials used to provide the raw meal, or enriched in at least one of them, or is added as powder or silt to the raw meal before feeding and/or during feeding at the kiln inlet or is added to the kiln, preferably through the burner, before or at the sintering zone.

7. The method according to at least one of claims 1 to 6, wherein the compound containing chrome is chosen from industrial side products containing chrome.

8. The method according to claim 7, wherein the industrial side products containing chrome are selected from ashes, slags, embers, ores, ores residues, chrome alloys or mixtures thereof.

9. The method according to at least one of claims 1 to 8, wherein glass powder, which is preferably selected from window glass powder, borosilicate glass powder, powdered waste glass or mixtures thereof, is used as additional mineralizer.

10. The method according to at least one of claims 1 to 9, wherein additionally one or more minor elements selected from the group consisting of Zn, Ti, Mn, Ba, Sr, Cu, V, Co, Ni, P, fluoride, chloride and mixtures thereof is/are used as mineralizer.

11. Method of manufacturing a ternesite or calcium sulfoaluminate ternesite cement, wherein a clinker is made by the method according to any one of claims 1 to 10 and is subjected to grinding.

12. Method according to claim 11, wherein a calcium sulphate source is added.

13. Method according to claim 12, wherein at least one calcium sulphate or mixtures of various calcium sulphates are added in an amount in the range of 1 to 25 % by weight, preferably in the range of 2 to 20 % by weight and most preferred in the range of 4 to 15 % by weight, relative to the total weight of the cement.

14. Method according to claim 12 or 13, wherein the calcium sulphate is added prior to the grinding or a separately ground calcium sulphate is blended and homogenized with the ground clinker.

15. Method according to at least one of claims 11 to 14, wherein a chromate reducing agent is added, preferably selected from ferrous sulphates, stannous sulphates, stannous chlorides, stannous oxides, sodium sulphates, and mixtures thereof.

16. Method according to at least one of claims 11 to 15, wherein a grinding aid, preferably selected from alkanolamines e.g. monoethanolamine, diethanolamine, triethanolamine or triisopropanolamine, sugars and sugar derivates, glycols e.g. monoethylene glycols or diethylene glycols, carboxylic acids like e.g. sodium gluconate, oleic acid, sulphonic acids or (ligno)sulphonate and mixtures thereof, especially diethanolamine or triisopropanolamine or mixtures thereof, is used.

17. Use of chrome as mineralizer for improving formation and/or thermal stability of ternesite in a method for producing a ternesite or calcium sulfoaluminate ternesite clinker in a single sintering step above 1200 °C by the following steps
- providing a raw meal comprising at least sources of CaO, SiO₂, Al₂O₃, and SO₃,
- sintering the raw meal in a kiln at a temperature ranging from >1200 to 1400 °C to provide a clinker
- cooling the clinker comprising 10 - 95 % by weight C₄A₃₋ₓFₓ$, with x ranging from 0 to 2, 5 - 90 % by weight C₅S₂$, 0 - 85 % by weight C₂S, 0 - 30 % by weight aluminates, 0 - 30 % by weight ferrites, 0 - 30 % by weight calcium sulfate and up to 20 % by weight minor phases, all with respect to the total weight of the clinker,
wherein the mineralizer comprises at least one compound containing chrome and is added to the raw meal prior to or during sintering providing a total amount of chrome calculated as Cr₂O₃ of at least 500 mg/kg in the raw meal.

18. The use according to claim 17, wherein the sintering temperature ranges from 1250 to 1350 °C.

19. The use according to claim 17 or 18, wherein the total amount of chrome in the raw meal is adjusted to ≥ 1000 mg/kg and preferably to ≥ 2000 mg/kg.

20. The use according to at least one of claims 17 to 19, wherein the clinker comprises 20 - 80 % by weight C₄A₃₋ₓFₓ$, with x ranging from 0 to 2, 10 - 60 % by weight C₅S₂$, 0 - 60 % by weight C₂S, 0 - 30 % by weight aluminates, 0 - 30 % by weight ferrites, 0 - 30 % by weight calcium sulfate and up to 20 % by weight minor phases, all with respect to the total weight of the clinker.

21. The use according to at least one of claims 17 to 20, wherein sources for Fe₂O₃ and/or for MgO are additionally provided in the raw meal.

22. The use according to at least one of claims 17 to 21, wherein the mineralizer is added to the raw materials used to provide the raw meal, or enriched in at least one of them, or is added as powder or silt to the raw meal before feeding and/or during feeding at the kiln inlet or is added to the kiln, preferably through the burner, before or at the sintering zone.

23. The use according to at least one of claims 17 to 22, wherein the compound containing chrome is chosen from industrial side products containing chrome.

24. The use according to claim 23, wherein the industrial side products containing chrome are selected from ashes, slags, embers, ores, ores residues, chrome alloys or mixtures thereof.

## Patentansprüche

1. Verfahren zur Verbesserung der Bildung und/oder thermischen Stabilität von Ternesit bei der Herstellung eines Ternesit- oder Calciumsulfoaluminat-Ternesit-Klinkers durch
- Bereitstellen eines Rohmehls, das mindestens Quellen von CaO, SiO₂, Al₂O₃ und SO₃ enthält,
- Sintern des Rohmehls in einem Ofen in einem einzigen Sinterschritt oberhalb von 1200 °C bei einer Temperatur im Bereich von > 1200 bis 1400 °C, um einen Klinker bereitzustellen
- Abkühlen des Klinkers umfassend 10 - 95 Gew.-% C₄A₃-ₓFₓ$, wobei x im Bereich von 0 - 2 liegt, 5 - 90 Gew.-% C₅S₂$, 0 - 85 Gew.-% C₂S, 0 - 30 Gew.-% Aluminate, 0 - 30 Gew.-% Ferrite, 0 - 30 Gew.-% Calciumsulfat und bis zu 20 Gew.-% Nebenphasen, jeweils bezogen auf das Gesamtgewicht des Klinkers,
wobei dem Rohmehl vor oder während des Sinterns mindestens eine chromhaltige Verbindung als Mineralisator zugesetzt wird, wodurch eine Gesamtmenge an Chrom, berechnet als Cr₂O₃, von mindestens 500 mg/kg im Rohmehl erhalten wird.

2. Verfahren gemäß Anspruch 1, wobei die Sintertemperatur im Bereich von 1250 bis 1350 °C liegt.

3. Verfahren gemäß Anspruch 1 oder 2, wobei die Gesamtchrommenge im Rohmehl auf ≥ 1000 mg/kg und vorzugsweise auf ≥ 2000 mg/kg eingestellt wird.

4. Verfahren gemäß mindestens einem der Ansprüche 1 bis 3, wobei der Klinker 20 - 80 Gew.-% C₄A₃-ₓFₓ$ umfasst, wobei x im Bereich von 0 bis 2 liegt, 10 - 60 Gew.-% C₅S₂$, 0 - 60 Gew.-% C₂S, 0 - 30 Gew.-% Aluminate, 0 - 30 Gew.-% Ferrite, 0 - 30 Gew.-% Calciumsulfat und bis zu 20 Gew.-% Nebenphasen, jeweils bezogen auf das Gesamtgewicht des Klinkers.

5. Verfahren gemäß mindestens einem der Ansprüche 1 bis 4, wobei im Rohmehl zusätzlich Quellen für Fe₂O₃ und/oder für MgO bereitgestellt sind.

6. Verfahren gemäß mindestens einem der Ansprüche 1 bis 5, wobei der Mineralisator den zur Bereitstellung des Rohmehls verwendeten Rohstoffen zugesetzt oder in mindestens einem davon angereichert wird oder als Pulver oder Schlick dem Rohmehl vor dem Zuführen und/oder während des Zuführens am Ofeneingang oder dem Ofen, vorzugsweise über den Brenner, vor oder in der Sinterzone zugesetzt wird.

7. Verfahren gemäß mindestens einem der Ansprüche 1 bis 6, wobei die chromhaltige Verbindung aus chromhaltigen, technischen Nebenprodukten ausgewählt wird.

8. Verfahren gemäß Anspruch 7, wobei die chromhaltigen, technischen Nebenprodukte ausgewählt sind aus Asche, Schlacken, Glutaschen, Erzen, Erzrückständen, Chromlegierungen oder Gemischen davon.

9. Verfahren gemäß mindestens einem der Ansprüche 1 bis 8, wobei Glaspulver, welches vorzugsweise ausgewählt ist aus Fensterglaspulver, Borosilikatglaspulver, Altglaspulver oder deren Gemischen als zusätzlicher Mineralisator eingesetzt wird.

10. Verfahren gemäß mindestens einem der Ansprüche 1 bis 9, wobei zusätzlich ein oder mehrere Nebenelemente ausgewählt aus der Gruppe bestehend aus Zn, Ti, Mn, Ba, Sr, Cu, V, Co, Ni, P, Fluorid, Chlorid und Gemischen davon als Mineralisator eingesetzt wird/werden.

11. Verfahren zur Herstellung eines Ternesit- oder Calciumsulfoaluminat-Ternesit-Zements, wobei ein Klinker nach dem Verfahren gemäß einem der Ansprüche 1 bis 10 hergestellt und gemahlen wird.

12. Verfahren gemäß Anspruch 11, wobei eine Calciumsulfatquelle zugesetzt wird.

13. Verfahren gemäß Anspruch 12, wobei mindestens ein Calciumsulfat oder Gemische verschiedener Calciumsulfate in einer Menge im Bereich von 1 bis 25 Gew.-%, vorzugsweise im Bereich von 2 bis 20 Gew.-% und am meisten bevorzugt im Bereich von 4 bis 15 Gew.-%, bezogen auf das Gesamtgewicht des Zements zugesetzt werden.

14. Verfahren gemäß Anspruch 12 oder 13, wobei das Calciumsulfat vor dem Mahlen zugesetzt wird oder ein getrennt gemahlenes Calciumsulfat mit dem gemahlenen Klinker gemischt und homogenisiert wird.

15. Verfahren gemäß mindestens einem der Ansprüche 11 bis 14, wobei ein Chromatreduktionsmittel zugesetzt wird, vorzugsweise ausgewählt aus Eisensulfaten, Zinnsulfaten, Zinnchloriden, Zinnoxiden, Natriumsulfaten und Gemischen davon.

16. Verfahren gemäß mindestens einem der Ansprüche 11 bis 15, wobei ein Mahlhilfsmittel, vorzugsweise ausgewählt aus Alkanolaminen, z.B. Monoethanolamin, Diethanolamin, Triethanolamin oder Triisopropanolamin, Zuckern und Zuckerderivaten, Glykolen, z.B. Monoethylenglykol oder Diethylenglykol, Carbonsäuren wie z.B. Natriumgluconat, Ölsäure, Sulfonsäuren oder (Ligno)Sulfonat und deren Gemischen, insbesondere aus Diethanolamin oder Triisopropanolamin oder deren Gemischen, verwendet wird.

17. Verwendung von Chrom als Mineralisator zur Verbesserung der Bildung und/oder thermischen Stabilität von Ternesit in einem Verfahren zur Herstellung eines Ternesit- oder Calciumsulfoaluminat-Ternesit-Klinkers in einem einzigen Sinterschritt über 1200ºC durch die folgenden Schritte
- Bereitstellen eines Rohmehls enthaltend mindestens Quellen von CaO, SiO₂, Al₂O₃ und SO₃,
- Sintern des Rohmehls in einem Ofen bei einer Temperatur im Bereich von > 1200 bis 1400 °C, um einen Klinker bereitzustellen
- Abkühlen des Klinkers umfassend 10 - 95 Gew.-% C₄A₃-ₓFₓ$, wobei x im Bereich von 0 bis 2 liegt, 5 - 90 Gew.-% C₅S₂$, 0 - 85 Gew.-% C₂S, 0 - 30 Gew.-% Aluminate, 0 - 30 Gew.-% Ferrite, 0 - 30 Gew.-% Calciumsulfat und bis zu 20 Gew.-% Nebenphasen, jeweils bezogen auf das Gesamtgewicht des Klinkers,
wobei dem Rohmehl vor oder während des Sinterns mindestens eine chromhaltige Verbindung als Mineralisator zugesetzt wird, wodurch eine Gesamtmenge an Chrom, berechnet als Cr₂O₃, von mindestens 500 mg/kg im Rohmehl erhalten wird.

18. Verwendung gemäß Anspruch 17, wobei die Sintertemperatur im Bereich von 1250 bis 1350 °C liegt.

19. Verwendung gemäß Anspruch 17 oder 18, wobei die Gesamtmenge an Chrom im Rohmehl auf ≥ 1000 mg/kg und vorzugsweise auf ≥ 2000 mg/kg eingestellt wird.

20. Verwendung gemäß mindestens einem der Ansprüche 17 bis 19, wobei der Klinker 20 - 80 Gew.-% C₄A₃-ₓFₓ$ umfasst, wobei x im Bereich von 0 bis 2 liegt, 10 - 60 Gew.-% C₅S₂$, 0 - 60 Gew.-% C₂S, 0 - 30 Gew.-% Aluminate, 0 - 30 Gew.-% Ferrite, 0 - 30 Gew.-% Calciumsulfat und bis zu 20 Gew.-% Nebenphasen, jeweils bezogen auf das Gesamtgewicht des Klinkers.

21. Verwendung gemäß mindestens einem der Ansprüche 17 bis 20, wobei im Rohmehl zusätzlich Quellen für Fe₂O₃ und/oder für MgO bereitgestellt sind.

22. Verwendung gemäß mindestens einem der Ansprüche 17 bis 21, wobei der Mineralisator den zur Bereitstellung des Rohmehls verwendeten Rohstoffen zugesetzt oder in mindestens einem davon angereichert wird oder als Pulver oder Schlick dem Rohmehl vor dem Zuführen und/oder während des Zuführens am Ofeneingang oder dem Ofen, vorzugsweise über den Brenner vor oder in der Sinterzone, zugesetzt wird.

23. Verwendung gemäß mindestens einem der Ansprüche 17 bis 22, wobei die chromhaltige Verbindung aus chromhaltigen, technischen Nebenprodukten ausgewählt ist.

24. Verwendung gemäß Anspruch 23, wobei die chromhaltigen, technischen Nebenprodukte ausgewählt sind aus Aschen, Schlacken, Glutaschen, Erzen, Erzrückständen, Chromlegierungen oder Gemischen davon.

## Revendications

1. Procédé d'amélioration de la formation et/ou de la stabilité thermique de la ternésite durant la production d'une ternésite ou d'un clinker de calcio sulfoaluminate de ternésite en
- fournissant une farine crue comprenant au moins des sources de CaO, SiO₂, Al₂O₃, et SO₃,
- frittant de la farine crue dans un four en une étape de frittage unique au-dessus de 1200 °C à une température s'étendant de > 1200 à 1400 °C pour fournir un clinker
- refroidissant du clinker comprenant de 10 à 95 % en poids de C₄A₃₋ₓFₓ$, avec x s'étendant de 0 à 2, de 5 - 90 % en poids de C₅S₂$, de 0 à 85 % en poids de C₂S, de 0 à 30 % en poids d'aluminates, de 0 à 30 % en poids de ferrites, de 0 à 30 % en poids de sulfate de calcium et jusqu'à 20 % en poids de phases mineures, tous par rapport au poids total du clinker,
où au moins un composé contenant du chrome est ajouté comme agent de minéralisation à la farine crue avant ou durant le frittage fournissant une quantité totale de chrome calculée comme Cr₂O₃ d'au moins 500 mg/kg dans la farine crue.

2. Procédé selon la revendication 1, dans lequel la température de frittage s'étend de 1250 à 1350 °C.

3. Procédé selon la revendication 1 ou 2, la quantité totale de chrome dans la farine crue étant ajustée à ≥ 1000 mg/kg et préférablement à ≥ 2000 mg/kg.

4. Procédé selon au moins l'une des revendications 1 à 3, dans lequel le clinker comprend de 20 à 80 % en poids de C₄A₃₋ₓFₓ$, avec x s'étendant de 0 à 2, de 10 à 60 % en poids de C₅S₂$, de 0 à 60 % en poids de C₂S, de 0 à 30 % en poids d'aluminates, de 0 à 30 % en poids de ferrites, de 0 à 30 % en poids de sulfate de calcium et jusqu'à 20 % en poids de phases mineures, tous par rapport au poids total du clinker.

5. Procédé selon au moins l'une des revendications 1 à 4, dans lequel des sources de Fe₂O₃ et/ou de MgO sont additionnellement prévues dans la farine crue.

6. Procédé selon au moins l'une des revendications 1 à 5, dans lequel l'agent de minéralisation est ajouté aux matériaux crus utilisés pour fournir la farine crue, ou enrichi en au moins l'un d'eux, ou est ajouté sous la forme d'une poudre ou d'une argile à la farine crue avant l'alimentation et/ou durant l'alimentation à l'orifice d'entrée du four ou est ajouté au four, préférablement à travers le brûleur, avant ou au niveau de la zone de frittage.

7. Procédé selon au moins l'une des revendications 1 à 6, dans lequel le composé contenant du chrome est choisi parmi les produits secondaires industriels contenant du chrome.

8. Procédé selon la revendication 7, dans lequel les produits secondaires industriels contenant du chrome sont sélectionnés parmi les cendres, les laitiers, les braises, les minerais, les résidus de minerais, les alliages de chrome ou leurs mélanges.

9. Procédé selon au moins l'une des revendications 1 à 8, dans lequel une poudre de verre, qui est préférablement sélectionnée parmi la poudre de vitre, la poudre de verre borosilicate, le verre déchet en poudre ou leurs mélanges, est utilisée comme agent de minéralisation additionnel.

10. Procédé selon au moins l'une des revendications 1 à 9, dans lequel additionnellement un ou plusieurs éléments mineurs sélectionnés dans le groupe constitué de Zn, Ti, Mn, Ba, Sr, Cu, V, Co, Ni, P, du fluorure, du chlorure et de leurs mélanges est/sont utilisé/utilisés comme agent de minéralisation.

11. Procédé de fabrication de ternésite ou de ciment de calcio sulfoaluminate de ternésite, où un clinker est fabriqué selon le procédé selon l'une quelconque des revendications 1 à 10 et est soumis au broyage.

12. Procédé selon la revendication 11, dans lequel une source de sulfate de calcium est ajoutée.

13. Procédé selon la revendication 12, dans lequel au moins un sulfate de calcium ou des mélanges de divers sulfates de calcium sont ajoutés en une quantité située dans la plage de 1 à 25 % en poids, préférablement dans la plage de 2 à 20 % en poids et de manière préférée entre toutes dans la plage de 4 à 15 % en poids, par rapport au poids total du ciment.

14. Procédé selon la revendication 12 ou 13, dans lequel le sulfate de calcium est ajouté avant le broyage ou un sulfate de calcium broyé séparément est mélangé et homogénéisé avec le clinker broyé.

15. Procédé selon au moins l'une des revendications 11 à 14, dans lequel un agent de réduction du chromate est ajouté, préférablement sélectionné parmi les sulfates ferreux, les sulfates stanneux, les chlorures stanneux, les oxydes stanneux, les sulfates de sodium, et leurs mélanges.

16. Procédé selon au moins l'une des revendications 11 à 15, dans lequel un auxiliaire de broyage, préférablement sélectionné parmi les alcanolamines par exemple la monoéthanolamine, la diéthanolamine, la triéthanolamine ou la triisopropanolamine, les sucres et les dérivés de sucre, les glycols par exemple les monoéthylène glycols ou les diéthylène glycols, les acides carboxyliques tels que par exemple le gluconate de sodium, l'acide oléique, les acides sulfoniques ou le (ligno)sulphonate et leurs mélanges, spécialement parmi la diéthanolamine ou la triisopropanolamine ou leurs mélanges, est utilisé.

17. Utilisation de chrome comme agent de minéralisation pour améliorer la formation et/ou la stabilité thermique de la ternésite dans un procédé de production d'une ternésite ou d'un clinker de calcio sulfoaluminate de ternésite dans une étape de frittage unique au-dessus de 1200 °C en suivant les étapes suivantes
- fourniture d'une farine crue comprenant au moins des sources de CaO, SiO₂, Al₂O₃, et SO₃,
- frittage de la farine crue dans un four à une température s'étendant de > 1200 à 1400 °C pour fournir un clinker
- refroidissement du clinker comprenant de 10 à 95 % en poids de C₄A₃₋ₓFₓ$, avec x s'étendant de 0 à 2, de 5 - 90 % en poids de C₅S₂$, de 0 à 85 % en poids de C₂S, de 0 à 30 % en poids d'aluminates, de 0 à 30 % en poids de ferrites, de 0 à 30 % en poids de sulfate de calcium et jusqu'à 20 % en poids de phases mineures, tous par rapport au poids total du clinker,
l'agent de minéralisation comprenant au moins un composé contenant du chrome et étant ajouté à la farine crue avant ou durant le frittage fournissant une quantité totale de chrome calculée comme Cr₂O₃ d'au moins 500 mg/kg dans la farine crue.

18. Utilisation selon la revendication 17, dans laquelle la température de frittage s'étend de 1250 à 1350 °C.

19. Utilisation selon la revendication 17 ou 18, la quantité totale de chrome dans la farine crue étant ajustée à ≥ 1000 mg/kg et préférablement à ≥ 2000 mg/kg.

20. Utilisation selon au moins l'une des revendications 17 à 19, dans laquelle le clinker comprend de 20 à 80 % en poids de C₄A₃₋ₓFₓ$, avec x s'étendant de 0 à 2, de 10 à 60 % en poids de C₅S₂$, de 0 à 60 % en poids de C₂S, de 0 à 30 % en poids d'aluminates, de 0 à 30 % en poids de ferrites, de 0 à 30 % en poids de sulfate de calcium et jusqu'à 20 % en poids de phases mineures, tous par rapport au poids total du clinker.

21. Utilisation selon au moins l'une des revendications 17 à 20, dans laquelle des sources de Fe₂O₃ et/ou de MgO sont additionnellement prévues dans la farine crue.

22. Utilisation selon au moins l'une des revendications 17 à 21, dans laquelle l'agent de minéralisation est ajouté aux matériaux crus utilisés pour fournir la farine crue, ou enrichi dans au moins l'un d'eux, ou est ajouté sous la forme d'une poudre ou d'une argile à la farine crue avant l'alimentation et/ou durant l'alimentation à l'orifice d'entrée du four ou est ajouté au four, préférablement à travers le brûleur, avant ou au niveau de la zone de frittage.

23. Utilisation selon au moins l'une des revendications 17 à 22, dans laquelle le composé contenant du chrome est choisi parmi les produits secondaires industriels contenant du chrome.

24. Utilisation selon la revendication 23, dans laquelle les produits secondaires industriels contenant du chrome sont sélectionnés parmi les cendres, les laitiers, les braises, les minerais, les résidus de minerais, les alliages de chrome ou leurs mélanges.
